# EUROPÄISCHE PATENTSCHRIFT

(11) **EP 1 563 261 B1**
(45) Veröffentlichungstag und Bekanntmachung des Hinweises auf die Patenterteilung: **04.01.2017**
(21) Anmeldenummer: 03767566.7
(22) Anmeldetag: 17.11.2003
(51) Int. Cl.: G01F 1/66

(54) **VORRICHTUNG ZUR BESTIMMUNG UND/ODER ÜBERWACHUNG DES VOLUMEN- UND/ODER DES MASSENDURCHFLUSSES EINES MEDIUMS**
DEVICE FOR THE DETERMINATION AND/OR MONITORING OF THE VOLUME AND/OR MASS FLOW OF A MEDIUM
DISPOSITIF PERMETTANT DE DETERMINER ET/OU DE SURVEILLER LE DEBIT VOLUMIQUE ET/OU MASSIQUE D'UN MILIEU

(30) Priorität: 19.11.2002 DE 10254054
(43) Veröffentlichungstag der Anmeldung: 17.08.2005
(73) Patentinhaber: Endress + Hauser Flowtec AG, 4153 Reinach BL 1 (CH)
(72) Erfinder: BUSSINGER, Klaus, CH-4142 Münchenstein (CH); FRÖHLICH, Thomas, CH-4142 Münchenstein (CH); STOCKER, Harald, 79650 Schopfheim (DE)
(74) Vertreter: Andres, Angelika Maria
(86) Internationale Anmeldenummer: PCT/EP2003/012861
(87) Internationale Veröffentlichungsnummer: WO 2004/046658

(56) Entgegenhaltungen:
- EP-A- 0 645 609
- WO-A-00/70313
- US-A- 4 918 995
- US-A- 5 199 306
- US-A- 5 333 508
- US-B1- 6 284 129

## Beschreibung

Die Erfindung bezieht sich auf eine Vorrichtung zur Bestimmung und/oder Überwachung des Volumen- und/oder Massendurchflusses eines Mediums, das ein Behältnis in einer Strömungsrichtung durchfließt, mit zumindest einem Ultraschallwandler, der Ultraschall-Meßsignale aussendet und/oder empfängt, und mit einer Regel-/Auswerteeinheit, die den Volumen- und/oder den Massendurchfluß des Mediums in dem Behältnis anhand der Ultraschall-Meßsignale nach dem Laufzeitdifferenz-Prinzip oder nach dem Doppler-Prinzip ermittelt.

Ultraschall-Durchflußmeßgeräte werden vielfach in der Prozeß- und Automatisierungstechnik eingesetzt. Sie erlauben es, den Volumen- und/oder Massenstrom eines Mediums in einem Behältnis, insbesondere in einem Rohr berührungslos zu bestimmen.

Die bekannten Ultraschall-Durchflußmeßgeräte arbeiten entweder nach dem Doppler-Prinzip oder nach dem Laufzeitdifferenz-Prinzip. Beim Laufzeitdifferenz-Prinzip wird die unterschiedliche Laufzeit von Ultraschall-Meßsignalen in Strömungsrichtung und entgegen der Strömungsrichtung des Mediums ausgewertet. Hierzu werden die Ultraschall-Meßsignale von den Ultraschallwandlern wechselweise in Strömungsrichtung und entgegen der Strömungsrichtung des Mediums ausgesendet bzw. empfangen. Anhand der Laufzeitdifferenz der Ultraschall-Meßsignale läßt sich die Fließgeschwindigkeit und damit bei bekanntem Durchmesser des Rohres der Volumendurchfluß bzw. bei bekannter Dichte des Mediums der Massendurchfluß bestimmen.

Beim Doppler-Prinzip werden Ultraschall-Meßsignale mit einer vorgegebenen Frequenz in das strömende Medium eingekoppelt. Die in dem Medium reflektierten Ultraschall-Meßsignale werden ausgewertet. Anhand einer zwischen dem eingekoppelten und dem reflektierten Ultraschall-Meßsignal auftretenden Frequenzverschiebung läßt sich ebenfalls die Fließgeschwindigkeit des Mediums bzw. der Volumen und/oder Massenstrom bestimmen. Der Einsatz von Durchflußmeßgeräten, die nach dem Doppler-Prinzip arbeiten, ist nur möglich, wenn in dem Medium Luftbläschen oder Verunreinigungen vorhanden sind, an denen die Ultraschall-Meßsignale reflektiert werden. Damit ist der Einsatz derartiger UltraschaIl-Durchflußmeßgeräte im Vergleich zu den Ultraschall-Durchflußmeßgeräten, die nach dem Laufzeitdifferenz-Prinzip arbeiten, ziemlich eingeschränkt. Hinsichtlich der Typen von Meßgeräten wird unterschieden zwischen Ultraschall- Durchflußmeßaufnehmern, die in das Rohr eingesetzt werden, und Clamp-On Durchflußmeßgeräten, bei denen die Ultraschallwandler von außen an die Rohrleitung mittels eines Spannverschlusses angepreßt werden. Clamp-On Durchflußmeßgeräte sind beispielsweise in der EP 0 686 255 B1, der US-PS 4,484,478 oder der US-PS 4,598,593 beschrieben. Bei beiden Typen von UltraschaIl-Durchflußmeßgeräten werden die Ultraschall.-Meßsignale unter einem vorgegebenen Winkel in das Rohr, in dem sich das strömende Medium befindet, eingestrahlt und/oder empfangen. Um die Ultraschall-Meßsignale unter einem bestimmten Winkel in das Rohr bzw. in das Medium einstrahlen zu können, erfolgt bei Clamp-On Durchflußmeßgeräten die Ein-und Auskopplung der Ultraschall-Meßsignale in das Rohr über einen Vorlaufkörper bzw. einen Koppelkeil. Um eine optimale Impedanzanpassung zu. erreichen, ist es darüber hinaus bekannt, die Koppelkeile aus einem geeignet brechenden Material, z.B. aus Kunststoff zu fertigen. Hauptbestandteil eines Ultraschallwandlers ist üblicherweise zumindest ein piezoelektrisches Element, welches die Ultraschall-Meßsignale erzeugt und/oder empfängt. Die US 4,918,995 offenbart ein Ultraschalldurchflussmessgerät mit einem Stromkreis, welcher sich in zwei kleinere Stromkreise aufteilt. Einem der Stromkreise wird zu einem bestimmten Zeitpunkt Energie entzogen.

Das Dokument WO007313A1 beschreibt ein Gasdurchflussmessgerät, welches einen Low-Power-Modus und einen High-Power-Modus aufweist, zwischen welchen Modi abhängig von der gemessenen Durchflussrate hin- und hergeschalten wird. Die Schrift EP0654609A1 offenbart ein Gasdurchflussmessgerät, in welchem Ultraschallsignale in und gegen die eine Strömungsrichtung geschickt werden, um eine Durchflussinformation zu erhalten. Die Schrift US5333508 zeigt ein Durchflussmessgerät für Flüssigkeiten basierend auf dem Dopplereffekt.

Es liegt auf der Hand, daß die Ultraschall-Meßsignale bei Durchgang durch das Medium und - im Fall von Clamp-On Meßgeräten - noch zusätzlich durch die Rohrwand bzw. aufgrund ungünstiger Impedanzverhältnisse bei der Ein und Auskopplung in das bzw. aus dem Medium stark abgeschwächt empfangen werden. Um brauchbare Meßergebnisse zu erhalten, müssen die empfangenen Ultraschall-Meßsignale geeignet verstärkt werden. Die Verstärkung liegt üblicherweise in einem Bereich von 20-120 dB. Die Frequenz der Ultraschall-Meßsignale ist im Bereich von ca. 100 kHz bis 10 MHz angesiedelt. Elektronische Bauteile, die in diesem Frequenzbereich arbeiten, haben einen relativ hohen Stromverbrauch bzw. eine relativ hohe Leistungsaufnahme.

Der Erfindung liegt die Aufgabe zugrunde, eine Vorrichtung zur Durchflußmessung vorzuschlagen, die sich durch einen geringen Stromverbrauch bzw. durch eine geringe Leistungsaufnahme auszeichnet.

Die Aufgabe wird durch die Merkmale des Anspruchs 1 gelöst. Hierbei weist dies Regel-/Auswerteeinheit zumindest einen Mikroprozessor, einen Verstärker und einen A/ D Wandler auf. wobei der Mikropzozessor den Verstärker und/oder den A/D Wandler intermittierend in einer Meßphase und in einer Ruhephase betreibt In der Meßphase ist der Verstärker und/oder der A/D Wandler aktiviert, während der Verstärker und/oder A/D Wandler in der Ruhephase eine reduzierte Leistungsaufnahme aufweisen/aufweist oder ausgeschaltet sind/ist. Wie bereits zuvor erwähnt, kann es sich bei dem Durchflußmeßgerät um ein Clamp-On Durchflußmeßgerät oder um ein Meßgerät, das in das Rohr einbringbar ist, handeln.

Durch das gezielte Abschalten der Komponenten Verstärker und/oder A/ D Wandler ist das Durchflußmeßgerät nach dem Wiedereinschalten wesentlich schneller betriebsbereit als wenn die Energieversorgung für das Meßgerät getaktet würde. Hier würde das An- und Abschalten der Stromversorgung sehr lange dauern, da es nach einem Ausschalten des Durchflußmeßgeräts stets eine gewisse Zeit braucht, bis wieder eine stabile Spannung zum Betreiben des Durchflußmeßgeräts zur Verfügung steht. Ein weiterer Vorteil des komponentenweisen Taktens des Durchflußmeßgeräts ist darüber hinaus darin zu sehen, daß die Meßperformance, d.h. die Anzahl der Messungen pro Zeiteinheit gegenüber dem ungetakteten, kontinuierlichen Betrieb nicht verringert wird. Daher ist es mit der erfindungsgemäßen Lösung möglich, trotz der Taktung einzelner Komponenten eine kontinuierliche Messung durchzuführen.

Eine vorteilhafte Weiterbildung der erfindungsgemäßen Vorrichtung sieht zumindest eine Komponente mit einer Schaltfunktion vor, wobei die Komponete mit der Schaltfunktion zumindest eine Komponente mit hohem Leistungsverbrauch aktiviert oder deaktiviert. Beispielsweise handelt es sich bei der Komponente mit der Schaltfunktion um einen Halbleiter-Schalter.

Eine besonders günstige Ausgestaltung der erfindungsgemäßen Vorrichtung sieht vor, daß in die Komponente mit der hohen Leistungsaufnahme eine Vorrichtung zur Verringerung des Stromverbrauchs bzw. der Leistungsaufnahme integriert ist. Hiermit kann z.B. ein Verstärker in einen Stromsparmode versetzt werden; ein Mikroprozessor kann in einen Sleep-Mode versetzt werden.

Gemäß einer vorteilhaften Weiterbildung der erfindungsgemäßen Vorrichtung wird vorgeschlagen, daß die Zeitspanne zwischen zwei aufeinanderfolgenden Meß- bzw. Ruhephasen der Komponente mit hoher Leistungsaufnahme und/ oder die Zeitdauer einer Meß- und/oder einer Ruhephase der Komponente mit hoher Leistungsaufnahme vorgegeben ist/sind. Eine alternative Ausführungsform sieht eine Eingabeeinheit vor, über die die Zeitspanne zwischen zwei aufeinanderfolgenden Meß- bzw. Ruhephasen der Komponente mit hoher Leistungsaufnahme und/oder die Zeitdauer einer Meß- und/oder Ruhephase der Komponente mit hoher Leistungsaufnahme vorgebbar ist.

Darüber hinaus sieht eine vorteilhafte Ausgestaltung der erfindungsgemäßen Vorrichtung vor, daß der Regel-/Auswerteeinheit ein Energiespeicherelement zugeordnet ist, das so ausgelegt ist, daß es zumindest die Energie speichern kann, die in der Meßphase zum Betreiben der Komponenten der Regel-/Auswerteeinheit bzw. des Durchflußmeßgeräts erforderlich ist.

Die Erfindung wird anhand der nachfolgenden Zeichnungen näher erläutert. Es zeigt:
Fig. 1: eine schematische Darstellung einer Ausgestaltung des erfindungsgemäßen Ultraschall-Durchflußmeßgeräts,
Fig. 2: ein Blockschaltbild einer ersten Ausführungsform der erfindungsgemäßen Vorrichtung,
Fig. 3: ein Blockschaltbild einer zweiten Ausführungsform der erfindungsgemäßen Vorrichtung und
Fig. 4: ein Laufzeitdiagramm eines Ultraschall-Meßsignals, an dem die Wirkungsweise der erfindungsgemäßen Vorrichtung verdeutlicht ist.

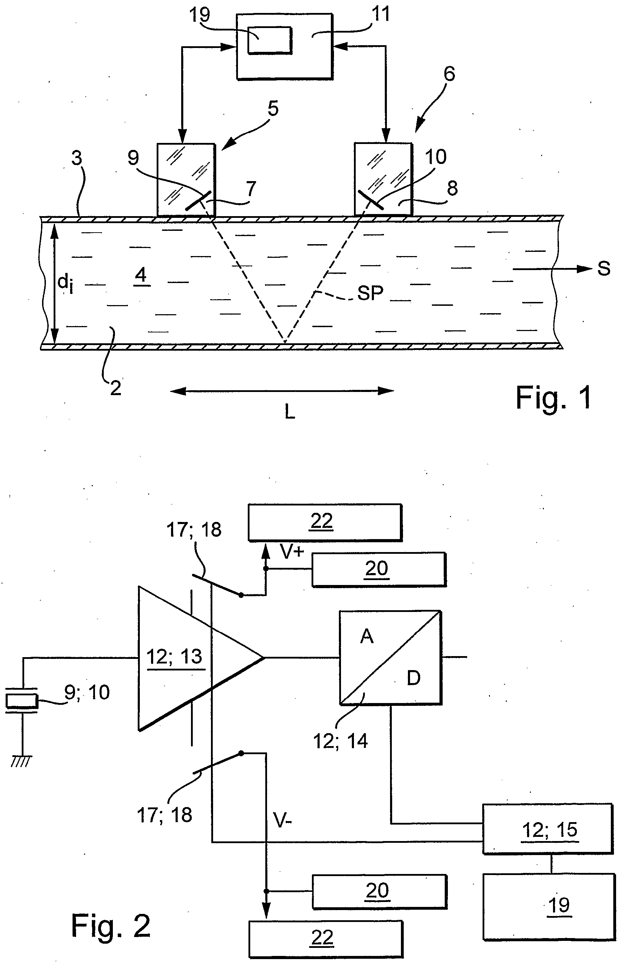

Fig. 1 zeigt eine schematische Darstellung einer Ausgestaltung des erfindungsgemäßen Ultraschall-Durchflußmeßgeräts 1. Bei dem Meßgerät 1 handelt es sich um ein Clamp-On Durchflußmeßgerät. Im gezeigten Fall ermittelt das Meßgerät 1 den Volumendurchfluß bzw. den Massendurchfluß des Mediums 4 nach der bekannten Laufzeitdifferenz-Methode.

Wesentliche Komponenten des Clamp-On Ultraschall-Durchflußmeßgerätes 1 sind die beiden Ultraschallwandler 5, 6 und die Regel-/Auswerteeinheit 11. Die beiden Ultraschallwandler 5, 6 sind mittels einer in der Fig. 1 nicht gesondert dargestellten Befestigungsvorrichtung in einem Abstand L voneinander an dem Rohr 2 angebracht. Entsprechende Befestigungsvorrichtungen sind aus dem Stand der Technik hinlänglich bekannt und werden auch von der Anmelderin angeboten und vertrieben. Das Rohr 2 mit dem Innendurch-messer *di* wird von dem Medium 4 in Strömungsrichtung S durchströmt.

Ein Ultraschallwandler 5; 6 weist als wesentlichen Bestandteil zumindest ein piezoelektrisches Element 9; 10, das die Ultraschall-Meßsignale erzeugt und/oder empfängt. Die Ultraschall-Meßsignale werden über den Koppelkeil 7; 8 in das vom Medium 4 durchströmte Rohr 2 eingekoppelt bzw. aus dem Rohr 2 ausgekoppelt. Ein Koppelkeil 7; 8 ist in bekannter Weise so ausgestaltet, daß sich eine möglichst gute Impedanzanpassunga beim Übergang von einem Medium in das andere realisieren läßt. Mit SP ist übrigens der Schallpfad gekennzeichnet, auf dem sich die Ultraschall-Meßsignale in dem Rohr 2 bzw. in dem Medium 4 ausbreiten. Im gezeigten Fall handelt es sich um eine sog. Zwei-Traversenanordnung der Ultraschallwandler 5, 6. Eine Traverse kennzeichnet dabei den Teilbereich des Schallpfades SP, auf dem ein Ultraschall-Meßsignal den Behälter 2 einmal quert. Die Traversen können je nach Anordnung der Ultraschallwandler 5, 6 und ggf. unter Einfügen eines Reflektorelements in den Schallpfad SP diametral oder chordial verlaufen.

Der Abstand L der beiden Ultraschallwandler 5, 6 ist möglichst so bemessen, daß ein großer Anteil der von dem jeweils einen Ultraschallwandler 5; 6 in das Rohr 2 eingestrahlten Energie von dem jeweils anderen Ultraschallwandler 6; 5 empfangen wird. Der optimale Abstand L der beiden Ultraschallwandler 5, 6 ist von mehreren System- und Prozeßgrößen abhängig. Sind diese Größen bekannt, so läßt sich der optimale Abstand L der Ultraschallwandler 5; 6 über die Laufzeit der Ultraschall-Meßsignale hochgenau berechnen. Bei der Berechnung kommt das Gesetz von Snellius in bekannter Weise zur Anwendung. Bei den System- und Prozeßgrößen handelt es sich insbesondere um den Innendurchmesser *di* des Rohres 2, um die Dicke w der Rohrwand 3, um die Schallgeschwindigkeit *cr* des Materials, aus dem das Rohr 2 gefertigt ist, oder um die Schallgeschwindigkeit c des Mediums 4.

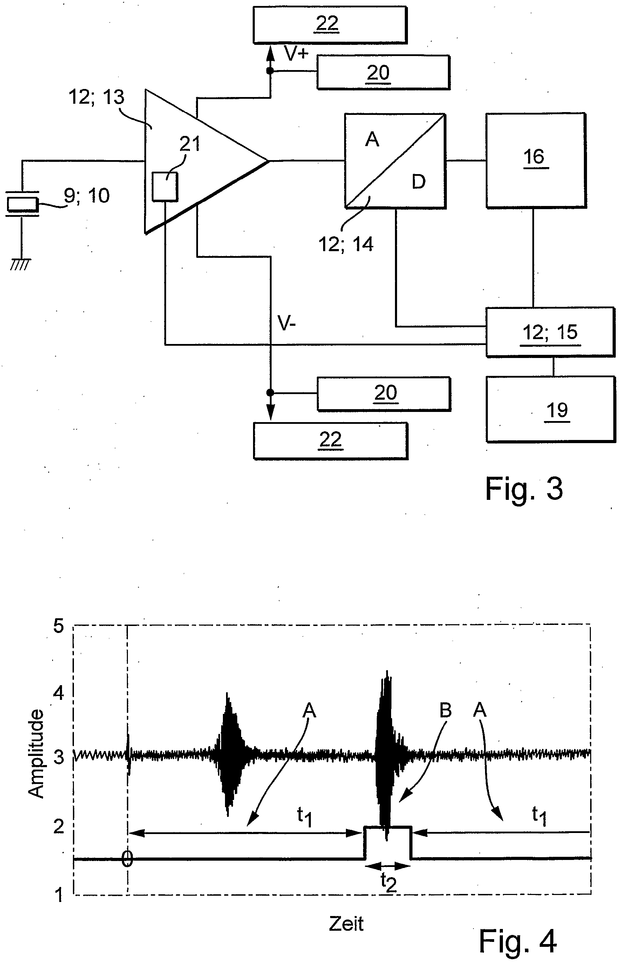

In Fig. 2 ist ein Blockschaltbild einer ersten Ausführungsform der erfindungsgemäßen Vorrichtung zu sehen; Fig. 3 zeigt ein Blockschaltbild einer alternativen Ausführungsform. Die beiden Blockschaltbilder sind stark vereinfacht: So wurde die Vorrichtung zur Anregung der Sensoren (Sendestufe) weggelassen. Ein ebenfalls üblicherweise vorhandener Multiplexer, der der Umschaltung der Sensoren dient, wurde ebenfalls nicht eingezeichnet.

Es wurde bereits an vorhergehender Stelle beschrieben, daß - je nach Verhältnissen auf dem Schallpfad SP - die empfangenen Ultraschall-Meßsignale verstärkt werden müssen, damit das Durchflußmeßgerät 1 brauchbare und zuverlässige Meßergebnisse liefert. Die erforderliche Verstärkung liegt üblicherweise im Bereich von 20-120 dB. Da die Frequenz der Ultraschall-Meßsignale im Bereich von ca. 100 kHz bis 10 MHz zu finden ist, müssen zur Verstärkung der Ultraschall-Meßsignale natürlich auch elektronische Bauteile eingesetzt werden, die in diesem Frequenzbereich arbeiten. Derartige Bauteile haben einen relativ hohen Stromverbrauch, bzw. sie haben eine relativ hohe Leistungsaufnahme. An diesem Punkt setzt die Erfindung ein.

Die von dem piezoelektrischen Element 9; 10 empfangenen Ultraschall-Meßsignale werden in dem Verstärker 13 mit einem geeigneten Verstärkungsfaktor verstärkt. Anschließend werden die Ultraschall-Meßsignale von dem Analog/Digital Wandler 14 digitalisiert und zur Auswertung an einen Mikroprozessor weitergeleitet. Die Auswertung kann beispielsweise von dem Mikroprozessor 15 übernommen werden. Die zuvorgenannten Komponenten sind einer Regel-/Auswerteeinheit 11 zugeordnet. Würden alle Komponenten kontinuierlich arbeiten, so würde ihr Leistungsbedarf die pro Zeiteinheit maximal zur Verfügung stehende Energie übersteigen. Erfindungsgemäß ist die Regel-/Auswerteeinheit 11 nun derart ausgestaltet, daß zumindest eine Komponente 12 mit einer hohen Leistungsaufnahme intermittierend in einer Meßphase und in einer Ruhephase betrieben wird. In der Meßphase ist die Komponente 12 mit der hohen Leistungsaufnahme aktiviert, während sie in der Ruhephase eine reduzierte Leistungsaufnahme aufweist oder ganz ausgeschaltet ist. Die Figuren Fig. 2 und Fig. 3 beziehen sich auf den Fall, daß es sich bei der Komponente 12 mit der hohen Leistungsaufnahme um den Verstärker 13 und/ oder den Analog/Digital 14 handelt. Der Mikroprozessor 15 taktet den Verstärker 13 und/oder den Analog/Digital Wandler 14 so, daß er/sie nur während der Meßphase t2 aktiviert ist/sind; während der Ruhephase t1 ist/sind der Verstärker 13 und/oder der Analog/Digital Wandler 14 deaktiviert.

Bei der in Fig. 2 dargestellten Ausgestaltung erfolgt die Taktung des Verstärkers 13 über den vom Mikroprozessor 15 angesteuerten Schalter 18. Bei dem Schalter 18 handelt es sich beispielsweise um einen Halbleiter-Schalter. Es ist möglich, daß der Analog/Digital Wandler z.B. durch An- und Abschalten des Taktes ein-und ausgeschaltet wird. Bei der in Fig. 3 gezeigten Ausführungsform erfolgt die Taktung des Verstärkers 13 über eine in den Verstärker 13 integrierte Komponente 21, die der Reduktion der Leistungsaufnahme des Verstärkers 13 dient. Die getaktete Ansteuerung der Komponente 21 übernimmt der Mikroprozessor 15.

Die Komponente 21 versetzt den Verstärker 13 entsprechend einem vorgegebenen und/oder errechneten Takt in einen Stromsparmode (bzw. in einen Sleep-Mode). Das Versetzen der Komponenten 12 mit hoher Leistungsaufnahme in den Stromsparmode kann entweder über die Unterbrechung der Speisung erfolgen (in Fig. 2 wird durch die Betätigung des Schalters 18 die Speisung des Verstärkers 13 unterbrochen) oder es wird ein bzw. kein Sampling Takt an die entsprechende Komponente 12, z.B. an den A/D Wandler 14 angelegt. Bei der zuletzt genannten Methode wird der Umstand ausgenutzt, daß der Stromverbrauch üblicherweise mit der Frequenz des anliegenden Taktes skaliert. Daher ist diese Ausgestaltung als besonders vorteilhaft anzusehen. Weiterhin kann auch die Leistungsaufnahme z.B. des Logikbausteins 16 über das An- und Abschalten des Taktes geregelt werden.

In Fig. 3 ist der Fall dargestellt, daß neben dem Verstärker 13 auch der A/D Wandler 14 und der Logikbaustein 16 getaktet werden können. Prinzipiell wird eine Taktung nur dann erfolgen, wenn die zur Verfügung stehende Energie nicht ausreicht. Dies ist insbesondere dann der Fall, wenn das Ultraschall-Meßgerät 1 über eine Zweidrahtleitung mit einer entfernten Kontrollstelle verbunden ist und über die gleiche Zweidrahtleitung von der Kontrollstelle her mit Energie versorgt wird.

Bei dem Logikbaustein 16 handelt es sich beispielsweise um ein PLD (Programmable Logic Device). Programmierbare Logikbausteine 16 werden bevorzugt eingesetzt, wenn die zu taktende Komponente schnell angesteuert werden soll. Durch den Einsatz eines Logikbausteins wird der Mikroprozessor 15 selbst entlastet. Insbesondere werden alle schnell auszuführenden Operationen vorzugsweise hardwaremäßig und nicht softwaremäßig in dem Logikbaustein 16 realisiert. Eine weitere Möglichkeit besteht darin, daß ein Prozessorkern und die notwendigen schnellen Logikfunktionen vom Entwickler selbst in ein entsprechendes programmierbares Bauteil implementiert werden. Bekannt ist diese Möglichkeit unter dem Begriff SoPC (System on a Programmable Chip). Ist dem Mikroprozessor ein PLD oder ein SoPC zugeordnet, so ist es gemäß einer Ausgestaltung der erfindungsgmäßen Vorrichtung je nach Anwendungsfall auch möglich, mindestens diese eine Komponente des Mikroprozessors 15 zu takten, während die verbleibende(n) Komponenten kontinuierlich mit Strom versorgt wird (werden).

Wie bereits erwähnt, ist anstelle des Halbleiter-Schalters 18 in Fig. 3 eine Vorrichtung 21 zur Reduktion der Stromaufnahme bzw. zum Unterbrechen der Stromaufnahme direkt in den Verstärker 13 integriert. Damit läßt sich der Verstärker 13 leicht in einen Stromsparmode versetzen.

In den Figuren Fig. 2 und Fig. 3 ist darüber hinaus jeweils ein Energiespeicherelement 20, insbesondere ein Kondensator vorgesehen. Dieses Energiespeicherelement 20 wird aktiviert, wenn trotz der Taktung der Komponente 12 mit hohem Stromverbrauch die zur Verfügung stehende Energie nicht zum Betreiben des Durchflußmeßgeräts 1 ausreicht. Die Eingabe-/Anzeigeeinheit 19 stellt die Schnittstelle zum Bedienpersonal her.

In Fig. 4 ist die Wirkungsweise der erfindungsgemäßen Vorrichtung anhand eines Laufzeitdiagramms verdeutlicht. Das Ultraschall-Meßsignal verläßt den Ultraschallwandler 5, 6 zum Zeitpunkt '0' und breitet sich einerseits über die Rohrwand (→erster Peak) und andererseits über das Medium 4 (→2. Peak) aus. Dargestellt ist in Fig. 4 übrigens ein typisches Laufzeitdiagramm, wie es sich bei der in Fig. 1 gezeigte Zwei-Traversen-Anordnung der Ultraschallwandler 5, 6 ergibt.

Damit der 2. Peak - also das die Fließgeschwindigkeit des Mediums 4 repräsentierende Ultraschall-Meßsignal - ausgewertet werden kann, muß der Verstärker 13 während der Zeitdauer t2, der sog. Meßphase, aktiviert sein. Die Meßphase schließt sich an die sog. Ruhephase an, in der der Verstärker 13 deaktiviert ist. Diese Ruhephase hat die Zeitdauer t1. Die Zeitdauer t1 der Ruhephase und die Zeitdauer t2 der Meßphase sind so aufeinander abgestimmt, daß jeweils zumindest die Ultraschall-Meßsignale, die die Information über die Fließgeschwindigkeit des Mediums 4 tragen, empfangen werden. Üblicherweise liegt die Pulsdauer eines Ultraschall-Meßsignals bei ca. 10 µsec. Übliche Puls-Repetitionsraten liegen in der Größenordnung von einigen Millisekunden. Erfindungsgemäß wird die Komponente 12 mit dem hohen Leistungsverbrauch, hier der Verstärker 13, nur während der Zeitdauer t2 aktiviert, wenn das Ultraschall-Meßsignal am jeweiligen Empfangs-Ultraschallwandler 5; 6 ankommt. Hierdurch wird der mittlere Stromverbrauch bzw. der mittlere Leistungsverbrauch im Verhältnis der Ein-/Ausschaltdauer t2 / t1 reduziert. Beträgt die Einschaltdauer t2 = 50 µsec und die Ausschaltdauer t1 = 5 msec, so ergibt sich folglich eine Leistungseinsparung von einem Faktor 100 gegenüber dem kontinuierlichen Betrieb.

Die Laufzeit des Ultraschall-Meßsignals läßt sich entweder messen oder errechnen. Eine Berechung der Laufzeit ist zumindest näherungsweise möglich, wenn die geometrischen Daten des Rohres (*dᵢ* und *w*) sowie die akustischen Eigenschaften des Rohres und des Mediums (*c_{R}* und *c_{M}*) bekannt sind. Anwendung findet bei der Berechung das Gesetz von Snellius.

### Bezugszeichenliste

- 1: Durchflußmeßgerät
- 2: Rohr / Behältnis
- 3: Rohrwand
- 4: Medium
- 5: Ultraschallwandler
- 6: Ultraschallwandler
- 7: Koppelkeil
- 8: Koppelkeil
- 9: Piezoelektrisches Element
- 10: Piezoelektrisches Element
- 11: Regel-/Steuereinheit
- 12: Komponente mit hohem Stromverbrauch
- 13: Verstärker
- 14: Anaolog/Digital Wandler
- 15: Mikroprozessor
- 16: Logikbaustein
- 17: Komponente mit Schaltfunktion
- 18: Halbleiter-Schalter
- 19: Eingabeeinheit
- 20: Energiespeicherelement
- 21: integrierte Vorrichtung zur Reduktion der Leistungsaufnahme
- 22: Energieversorgung

## Patentansprüche

1. Vorrichtung zur Bestimmung und/oder Überwachung des Volumen- und/oder Massendurchflusses
eines Mediums (4), das ein Behältnis (2) in einer Strömungsrichtung (S) durchfließt, mit
- zumindest einem Ultraschallwandler (5; 6), der Ultraschall-Meßsignale aussendet und/oder empfängt, und mit
- einer Regel-/Auswerteeinheit, die den Volumen- und/oder den Massendurchfluss des Mediums in dem Behältnis anhand der Ultraschall-Meßsignale nach dem Laufzeitdifferenz- Prinzip oder nach dem Doppler-Prinzip ermittelt,
- wobei die Regel-/Auswerteeinheit (11) einen Mikroprozessor (15), einen Verstärker (13) und einen Analog/Digital-Wandler (14) aufweist,
- wobei der Mikroprozessor (15) derart ausgestaltet ist, dass er den Verstärker (13)
und/ oder den Analog/Digital-Wandler (14) intermittierend in einer Messphase und einer Ruhephase betreibt, wobei er den Verstärker (13) und/oder den Analog/DigitalWandler (14) so taktet, daß er/sie nur während einer Meßphase (t2) aktiviert ist/sind und während einer Ruhephase (t1) eine reduzierte Leistungsaufnahme aufweist/aufweisen oder ausgeschaltet ist/sind,
**dadurch gekennzeichnet, dass**
die Regel-/Auswerteeinheit (11) derart ausgestaltet ist, dass sie anhand von vorgegebenen System- und/oder Prozeßgrössen die Laufzeit der Ultraschall-Meßsignale ermittelt und die Zeitspanne zwischen zwei aufeinanderfolgenden Meß- bzw. Ruhephasen und/oder die Zeitdauer der Meßphase (t2) und/oder die Zeitdauer der Ruhephase (t1) entweder in Abhängigkeit von der ermittelten Laufzeit oder in Abhängigkeit von der ermittelten Laufzeit und in Abhängigkeit von der zur Verfügung stehenden Energie vorgibt.

2. Vorrichtung nach Anspruch 1,
**dadurch gekennzeichnet,**
**dass** es sich bei der Vorrichtung um ein Clamp-On Durchflußmeßgerät oder um ein Meßgerät handelt, das in das Behältnis (2) einbringbar ist.

3. Vorrichtung nach Anspruch 1 oder 2,
**dadurch gekennzeichnet,**
**dass** ein Logikbaustein (16) vorgesehen ist, der in einer Meßphase und in einer Ruhephase betrieben wird.

4. Vorrichtung nach Anspruch 1 oder 3,
**dadurch gekennzeichnet,**
**dass** zumindest eine Komponente (17) mit einer Schaltfunktion vorgesehen ist, wobei die Komponente (17) mit der Schaltfunktion zumindest eine Komponente (12) mit hohem Leistungsverbrauch aktiviert oder deaktiviert.

5. Vorrichtung nach Anspruch 3 oder 4,
**dadurch gekennzeichnet,**
**dass** eine Vorrichtung zur Reduktion der Stromaufnahme in die Komponente (12) mit der hohen Leistungsaufnahme integriert ist.

6. Vorrichtung nach Anspruch 4,
**dadurch gekennzeichnet,**
**dass** es sich bei der Komponente (17) mit der Schaltfunktion um einen Halbleiter-Schalter (18) handelt.

7. Vorrichtung nach Anspruch 1,
**dadurch gekennzeichnet,**
**dass** die Zeitspanne zwischen zwei aufeinanderfolgenden Meß- bzw. Ruhephasen des Verstärkers (13) und/oder des Analog/Digital-Wandlers (14) und/oder
die Zeitdauer einer Meßphase (t2) und/oder die Zeitdauer einer Ruhephase (t1) des Verstärkers (13) und/oder des Analog/Digital-Wandlers (14) vorgegeben ist/sind.

8. Vorrichtung nach Anspruch 1,
**dadurch gekennzeichnet,**
**dass** eine Eingabeeinheit (19) vorgesehen ist, über die Zeitspanne zwischen zwei aufeinanderfolgenden Meß- bzw. Ruhephasen des Verstärkers (13) und/oder des A/D-Wandlers (14) und/oder die Zeitdauer einer Meßphase (t2) und/oder die Zeitdauer einer Ruhephase (t1) des Verstärkers (13) und/oder des Analog/Digital-Wandlers (14) vorgebbar ist.

9. Vorrichtung nach Anspruch 1,
**dadurch gekennzeichnet,**
**dass** der Regel-/Auswerteeinheit (11) ein Energiespeicherelement (20) zugeordnet ist, das so ausgelegt ist, dass es zumindest die Energie speichern kann, die in der Meßphase erforderlich ist.

10. Vorrichtung nach einem oder mehreren der vorhergehenden Ansprüche, **dadurch gekennzeichnet,**
**dass** die Vorrichtung über eine Zweidrahtleitung mit einer entfernten Kontrollstelle verbunden ist und dass das die Vorrichtung über die gleiche Zweidrahtleitung von der Kontrollstelle her mit Energie versorgt wird.

## Claims

1. Apparatus to determine and/or monitor the volume flow and/or mass flow of a medium (4) which flows through a vessel (2) in a direction of flow (S), with
- at least one ultrasonic converter (5, 6), which emits and/or receives ultrasonic measuring signals, and with
- a control/evaluation unit which determines the volume flow and/or mass flow of the medium in the container using the ultrasonic measuring signals according to the time of flight principle or according to the Doppler principle,
- wherein the control/evaluation unit (11) comprises a microprocessor (15), an amplifier (13) and an analog-to-digital converter (14),
- wherein the microprocessor (15) is designed in such a way that it intermittently operates the amplifier (13) and/or the analog-to-digital converter (14) in a measuring phase and a rest phase, wherein the microprocessor synchronizes the amplifier (13) and/or the analog-to-digital converter (14) that it/they is/are only active during a measuring phase (t2) and has/have reduced power consumption or is/are switched off during a rest phase (t1),
**characterized in that**
the control/evaluation unit (11) is designed in such a way that it determines the time of flight of the ultrasonic measuring signals using predefined system variables and/or process variables, and specifies the interval between two consecutive measuring phases and rest phases and/or the duration of the measuring phase (t2) and/or the duration of the rest phase (t1) either depending on the determined time of flight, or depending on the determined time of flight and depending on the energy available.

2. Apparatus as claimed in Claim 1,
**characterized in that**
the apparatus is a clamp on flowmeter or a measuring device that can be installed in the vessel (2).

3. Apparatus as claimed in Claim 1 or 2,
**characterized in that**
a logic module (16) is provided which is operated in a measuring phase and in a rest phase.

4. Apparatus as claimed in Claim 1 or 3,
**characterized in that**
at least one component (17) with a switching function is provided, wherein the component (17) with the switching function enables or disables at least one component (12) with a high level of power consumption.

5. Apparatus as claimed in Claim 3 or 4,
**characterized in that**
an apparatus to reduce power consumption is integrated into the component (12) with the high level of power consumption.

6. Apparatus as claimed in Claim 4,
**characterized in that**
the component (17) with the switching function is a semi-conductor switch (18).

7. Apparatus as claimed in Claim 1,
**characterized in that**
the time interval between two consecutive measuring and rest phases of the amplifier (13) and/or of the analog-to-digital converter (14) is/are prespecified and/or
the duration of a measuring phase (t2) and/or the duration of a rest phase (t1) of the amplifier (13) and/or of the analog-to-digital converter (14) is/are prespecified.

8. Apparatus as claimed in Claim 1,
**characterized in that**
an input unit (19) is provided via which the time interval between two consecutive measuring phases and rest phases of the amplifier (13) and/or of the A/D converter (14) and/or the duration of a measuring phase (t2) and/or the duration of a rest phase (11) of the amplifier (13) and/or of the analog-to-digital converter (14) can be prespecified.

9. Apparatus as claimed in Claim 1,
**characterized in that**
a power storage element (20) is assigned to the control/evaluation unit (11), said storage element being designed in such a way that it can at least store the energy that is required in the measuring phase.

10. Apparatus as claimed in one or more of the previous claims,
**characterized in that**
the apparatus is connected to a remote control point via a two-wire cable and **in that** the apparatus is powered via the same two-wire cable from the control point.

## Revendications

1. Dispositif destiné à la détermination et/ou la surveillance du débit volumique et/ou massique d'un produit (4) qui circule à travers un récipient (2) dans un sens d'écoulement (S), avec
- au moins un convertisseur ultrasonore (5, 6), qui émet et/ou reçoit des signaux de mesure ultrasonores, et avec
- une unité de régulation / d'exploitation, qui détermine le débit volumique et/ou massique du produit dans le réservoir au moyen des signaux de mesure ultrasonores d'après le principe de la différence des temps de propagation ou d'après le principe Doppler,
- pour lequel l'unité de régulation / d'exploitation (11) comprend un microprocesseur (15), un amplificateur (13) et un convertisseur analogique/numérique (14,
- le microprocesseur (15) étant conçu de telle sorte à piloter l'amplificateur (13) et/ou le convertisseur analogique/numérique (14) de façon intermittente dans une phase de mesure et dans une phase de repos, lequel microprocesseur synchronise l'amplificateur (13) et/ou le convertisseur analogique/numérique (14) de telle sorte à ne l'activer / les activer que pendant une phase de mesure (t2) et de telle sorte qu'il(s) présente(nt) pendant une phase de repos (t1) une consommation de puissance réduite ou qu'il(s) est/sont hors tension,
**caractérisé**
**en ce que** l'unité de régulation / d'exploitation (11) est conçue de telle sorte à déterminer au moyen de grandeurs système et/ou de process prédéfinies le temps de propagation des signaux de mesure ultrasonores, et à spécifier l'intervalle de temps entre deux phases consécutives de mesure ou de repos et/ou la durée de la phase de mesure (t2) et/ou la durée de la phase de repos (t1), soit en fonction du temps de propagation déterminé, soit en fonction du temps de propagation déterminé et en fonction de l'énergie disponible.

2. Dispositif selon la revendication 1,
**caractérisé**
**en ce que**, concernant le dispositif, il s'agit d'un débitmètre Clamp On ou d'un appareil de mesure qui peut être installé dans le réservoir (2).

3. Dispositif selon la revendication 1 ou 2,
**caractérisé**
**en ce qu'**est prévu un module logique (16), qui est utilisé dans une phase de mesure et dans une phase de repos.

4. Dispositif selon la revendication 1 ou 3,
**caractérisé**
**en ce qu'**est prévu au moins un composant (17) avec une fonction de commutation, le composant (17) activant ou désactivant avec la fonction de commutation au moins un composant (12) présentant une consommation d'énergie élevée.

5. Dispositif selon la revendication 3 ou 4,
**caractérisé**
**en ce qu'**est intégré dans le composant (12) présentant une consommation d'énergie élevée un dispositif destiné à la réduction de la consommation de courant.

6. Dispositif selon la revendication 4,
**caractérisé**
**en ce que**, concernant le composant (17) avec la fonction de commutation, il s'agit d'un interrupteur à semi-conducteur (18).

7. Dispositif selon la revendication 1,
**caractérisé**
**en ce que** l'intervalle de temps entre deux phases consécutives de mesure ou de repos de l'amplificateur (13) et/ou du convertisseur analogique/numérique (14) et/ou
la durée d'une phase de mesure (t2) et/ou la durée d'une phase de repos (t1) de l'amplificateur (13) et/ou du convertisseur analogique/numérique (14) est/sont prédéfinie(s).

8. Dispositif selon la revendication 1,
**caractérisé**
**en ce qu'**est prévue une unité d'entrée (19), par l'intermédiaire de laquelle l'intervalle de temps entre deux phases consécutives de mesure ou de repos de l'amplificateur (13) et/ou du convertisseur N/A (14) et/ou la durée d'une phase de mesure (t2) et/ou la durée d'une phase de repos (t1) de l'amplificateur (13) et/ou convertisseur analogique/numérique (14) est/sont prédéfinissable(s).

9. Dispositif selon la revendication 1,
**caractérisé**
**en ce qu'**est attribuée à l'unité de régulation / d'exploitation (11) un élément accumulateur d'énergie (20), qui est conçu de telle manière qu'il puisse accumuler au moins l'énergie nécessaire dans la phase de mesure.

10. Dispositif selon l'une ou plusieurs des revendications précédentes,
**caractérisé**
**en ce qu'**un câble bifilaire est relié avec un poste de contrôle distant et en ce que le dispositif est alimenté en énergie par l'intermédiaire du même câble bifilaire depuis le poste de contrôle.
